# EUROPÄISCHE PATENTSCHRIFT

(11) **EP 3 798 073 B1**
(45) Veröffentlichungstag und Bekanntmachung des Hinweises auf die Patenterteilung: **03.04.2024**
(21) Anmeldenummer: 20196054.9
(22) Anmeldetag: 14.09.2020
(51) Int. Cl.: B60W 10/26, B60W 10/30, B60W 20/16, B60W 10/06, B60W 10/08, B60W 20/17, B60W 30/188, B60W 50/00

(54) **VERFAHREN ZUR DURCHFÜHRUNG EINER LASTPUNKTVERSCHIEBUNG EINER VERBRENNUNGSKRAFTMASCHINE BEI AKTIVIEREN ODER DEAKTIVIEREN EINES ELEKTRISCH BEHEIZTEN BAUTEILS (E-KAT)**
METHOD FOR LOAD POINT DISPLACEMENT OF A COMBUSTION ENGINE UPON ACTIVATION OR DEACTIVATION OF AN ELECTRICALLY HEATED COMPONENT (E-KAT )
PROCÉDÉ DE MISE EN OEUVRE D'UN CHANGEMENT DE POINT DE CHARGE D'UN MOTEUR À COMBUSTION INTERNE LORS DE L'ACTIVATION OU DE LA DÉSACTIVATION D'UN COMPOSANT CHAUFFÉ ÉLECTRIQUEMENT (E-KAT)

(30) Priorität: 25.09.2019 DE 102019214701
(43) Veröffentlichungstag der Anmeldung: 31.03.2021
(73) Patentinhaber: VOLKSWAGEN AG, 38440 Wolfsburg (DE)
(72) Erfinder: Jakovlev, Sergej, 38100 Braunschweig (DE); Bunkus, Johannes, 39393 Hötensleben OT Barneberg (DE)

(56) Entgegenhaltungen:
- EP-A1- 2 716 885
- WO-A2-2012/097349
- DE-A1-102005 060 129
- DE-A1-102016 207 037
- DE-A1-102016 219 038
- JP-A- 2009 035 226

## Beschreibung

Die Erfindung betrifft ein Verfahren mit den Merkmalen des Oberbegriffs des Patentanspruchs 1.

Zukünftig weiter reduzierte Schadstoffgrenzwerte erfordern eine hocheffiziente Abgasnachbehandlung (ANB). Um einen ausreichend hohen Wirkungsgrad der einzelnen Komponenten zu erreichen, müssen sie möglichst schnell ihre Light-Off-Temperatur überschreiten. Eine Möglichkeit stellt das aktive Aufheizen der Komponenten mittels eines elektrisch beheizten Katalysators eines sogenannten e-Kats dar. Dabei sollte für ein schnelles Aufheizen die Heizleistung des e-Kats größer gleich 2 kW, besser größer gleich 3 kW, bevorzugt größer gleich 4 kW betragen.

Die elektrische Leistung wird dabei in der Regel über eine elektrische Maschine z.B. über einen Riemenstartergenerator zur Verfügung gestellt. Dadurch verschiebt sich der Lastpunkt der Verbrennungskraftmaschine hin zu höherer Last. Dies ist vorteilhaft, weil ein höherer Lastpunkt der Verbrennungskraftmaschine zu höheren Abgastemperaturen und somit einer schnelleren Aufheizung der Abgasnachbehandlung führt. Die höhere Last hat in der Regel ein lauteres Geräusch der Verbrennungskraftmaschine zur Folge, welches vom Fahrer ggf. negativ wahrgenommen werden kann. Das Geräuschniveau kann also als besonders negativ empfunden werden, weil die Heizanforderung nicht direkt durch eine Handlung des Fahrers beeinflusst bzw. initiiert wird. Besonders kritisch sind hierbei e-Kat-Systeme, bei denen die Leistung nur diskontinuierlich eingestellt werden kann. Dies tritt u.a. auf, wenn das e-Kat-Steuergerät als PWM- / Transistor-Schalter ausgeführt ist. Bei einem diskontinuierlichen Lastsprung ändert sich entsprechend schlagartig das Geräusch der Verbrennungskraftmaschine. Ferner existieren kontinuierlich verstellbare Systeme mit einem DC/DC-Wandler.

Aus der DE 10 2016 207 037 A1 und der DE 10 2016 207 039 A1 sind ein Verfahren und eine Vorrichtung zum Betrieb eines elektrischen energiespeicheraufweisenden Hybridfahrzeuges mit einem Elektromotor mit einem Verbrennungsmotor bekannt. Hierbei werden definierte Ereignisse mit Maskierungspotenzialen koordiniert für die Anhebung der Akustikgrenzen zur Lastpunktanhebung bzw. Lastpunktvariation verwendet. Es wird eine Sonderbetriebsstrategie für einen Verbrennungsmotor ausgelöst, durch die eine Erhöhung des Ladezustands eines Energiespeichers erreichbar ist, wenn vorgegebene akustische Bedingungen erfüllt sind. Die Sonderbetriebsstrategie wirkt leistungserhöhend durch eine Lastpunktangleichung bis zum variabel vorgegebener Akustikgrenzen, die in Abhängigkeit vom ermittelten Maskierungspotentialen bestimmter akustischer Ereignisse definiert werden. Es wird eine Vorrichtung zur Durchführung des Verfahrens vorgeschlagen, welches die Akustikgrenzen zur Lastpunktsteuerung des Verbrennungsmotors mindestens auf das Niveau anhebt, dass wegen der Maskierung mindestens eines akustisch relevanten Ereignisses aktuell zulässig ist. Nach Inbetriebnahme eines solchen Hybridfahrzeuges wird überprüft, welche akustisch relevanten Ereignisse jeweils aktuell vorliegen. Zur Koordination der jeweils aktuell gelichzeitig vorliegenden Maskierungspotentiale wird das Maximum aus allen Maskierungspotentialen in Form eines Maximalschalldruckspektrums ermittelt. Das so gebildete Gesamtschalldruckspektrum wird mit einem ebenfalls in der Steuereinheit vorgehaltenen lastabhängigen Schalldruckspektrum des Verbrennungsmotors verglichen. Daraufhin wird derjenige Lastpunkt für den Verbrennungsmotor gewählt, dessen Schalldruckspektrum jeweils unterhalb des koordinierten Gesamtschalldruckspektrums liegt bzw. ausreichend von diesem maskiert wird. Das Gesamtschalldruckspektrum ist eine variabel vorgebbare Akustikgrenze. Eine Lastpunktanhebung kann durch einen absoluten Lastwert als Funktion der jeweils vorliegenden akustisch relevanten maskierenden Ereignisse vorgegeben werden oder auch als Differenz zu einem Basislastwert, der ebenfalls durch ein Basisschaltspektrum vorgegeben sein kann. Ein derartiges Basisschaltspektrum kann empirisch ermittelt und in der Steuereinheit abgespeichert sein. Das Basisschaltspektrum kann ein maximal akzeptierter, höherer Motorschall sein, wenn keine zusätzlichen gegenüber einem Grundzustand z.B. aufgrund von geschwindigkeitsabhängigen stets mindestens vorhandenen Windgeräuschen oder Abrollgeräuschen auf glatter Fahrbahn maskierenden Ereignisse vorliegen. Die Basisakustikschwelle ist abhängig vom Fahrzustand z.B. vom Wunschantriebsmoment des Fahrers und von der Geschwindigkeit. Als akustisch relevante Ereignisse gelten insbesondere Ereignisse durch fahrzeuginterne Einflussquellen, deren charakteristische Spektren bekannt sind oder deren Auftreten durch fahrzeuginterne Systeme gesteuert werden können, wie z.B. ein Gebläse oder Klimaanlage, offene Fenster, offenes Schiebedach oder die Fahrzeuggeschwindigkeit. Ferner werden als Ereignisse fahrzeugexterne Einflussquellen berücksichtigt, deren Auftreten durch Sensoren erfassbar sind, wie Regen, Straßenbelag oder Tunneldurchfahrt. Ferner werden nutzerverursachte Einflussquellen insbesondere durch den Betrieb von Audioanlagen berücksichtigt. Ferner können unbekannte Einflussquellen als Ereignis berücksichtigt werden, die über mindestens ein Mikrophon erfasst werden. Durch die Maskierung können die Akustikgrenzen ohne Komforteinbußen angehoben werden.

Aus der DE 10 2008 023 394 A1 ist eine Hybridkaltstartstrategie unter Verwendung eines elektrisch beheizten Katalysators bekannt. Der Abgaskatalysator ist einem Heizelement zugeordnet, beispielsweise einem elektrisch beheizten Katalysator, der dem Abgaskatalysator zusätzliche Wärme liefert. Das zusätzliche Beheizen sieht eine verringerte Zeit bis zum Anspringen des Abgaskatalysators vor. Ein Brennkraftmaschinensteuermodul kann Daten auswerten einschließlich der Umgebungslufttemperatur, der Brennkraftmaschinenkühlmitteltemperatur, der Abgasströmung und der dem elektrisch beheizten Kondensator gelieferten Leistung, um die Zeit zu schätzen, zu der der elektrisch beheizte Kondensator nach dem Brennkraftmaschinenstart eingeschaltet werden sollte. Das Brennkraftmaschinensteuermodul kann andere Informationen berücksichtigen, einschließlich Kraftstoff- / Luftverhältnisse und Zündverzögerungsdaten, um die Temperatur des Katalysators in dem Abgaskondensator zu schätzen.

Aus der DE10 2016 219 038 A1 ist ein Verfahren zum Steuern einer Abgasreinigungsanlage in einem Kraftfahrzeug mit einem Hybridantrieb mit einer Brennkraftmaschine und einem Elektromotor, einem Abgastrakt, mindestens einem Stickoxidspeicherkatalysator (LNT), mindestens einem Akkumulator und mindestens einer Heizeinrichtung im Abgastrakt bekannt. Das Verfahren weist folgende Schritte auf:
- Betreiben der Brennkraftmaschine,
- Ermitteln der Temperatur des LNT,
- Ermitteln des Ladezustands des Akkumulators,
- Einschalten der elektrischen Heizeinrichtung zum Erwärmen des LNT, solange der Ladezustand des Akkumulators über einem ersten vorbestimmten Niveau und die Temperatur des LNT unter einem Schwellenwert liegt,
- Erhöhen des Drehmoments der Brennkraftmaschine, solange der Ladezustand des Akkumulators unter einem zweiten vorbestimmten Niveau liegt,
- Starten einer Regeneration des LNT, indem die Brennkraftmaschine mit einem fetten Abgasgemisch betrieben wird,
- Abschalten der elektrischen Heizeinrichtung, wenn die Temperatur der Abgasnachbehandlungseinrichtung einen vorbestimmten Wert erreicht hat.

Die JP 2009 035 226 A zeigt ein Abgasreinigungssteuergerät für ein Hybridfahrzeug.

Weiterhin weist das Hybridfahrzeug weiterhin eine Verbrennungskraftmaschine, eine Elektromaschine, zumindest einen Akkumulator, eine Abgasreinigungseinheit und eine Heizung für die Abgasreinigungseinheit auf. Ob die Heizung ein- oder ausgeschaltet wird, hängt von der Ist-Temperatur und der Soll-Temperatur der Abgasreinigungseinheit, sowie von dem Ladezustand des zumindest einen Akkumulators ab.

In der EP 2 716 885 A1 ist ein Kraftfahrzeug mit einer Verbrennungskraftmaschine, einem beheizbaren Katalysator, zumindest einem Generator und einer Batterie offenbart, wobei der Generotor mittels der Verbrennungskraftmaschine antreibbar ist, wobei mittels der vom Generator erzeugten Energie der Katalysator beheizbar und / oder die Batterie aufladbar ist. Bei einem Anfahren am Berg oder bei einem Anfahren mit einer großen Betätigung des Gaspedals wird ein Teil der dann für einen Antrieb des Kraftfahrzeugs zu großen, vom Verbrennungsmotor bereitgestellten Energie von der Heizung des Katalysators aufgenommen. Deswegen muss der Verbrennungsmotor bei einem Anfahren am Berg oder bei einem Anfahren mit einer großen Betätigung des Gaspedals nicht gedrosselt werden.

Die DE 10 2005 060 129 A1 zeigt ein Verfahren zum Steuern eines Bordnetzes für ein Kraftfahrzeug mit einem Generator, der mindestens ein erstes und ein zweites Teilnetz mit jeweils mehreren elektrischen Verbrauchern inklusive eines aufheizbaren E-Katalysators versorgt. Da mittels des Generators nur eine bestimmte Energie bereitstellbar ist, erfolgt eine Priorisierung der Verbraucher. Eine Generatorleistung kann bei einer entsprechend hohen Priorität durch ein Boosten des Generators, ein Anpassen einer Leerlaufdrehzahl eines zum Antrieb des Generators genutzten Verbrennungsmotors und / oder durch das Boosten eines Spannungswandlers erhöht werden.

Die WO 2012/097349 A2 zeigt ein Verfahren zum Steuern eines Hybridantriebs unter Verwendung von verschiedenen Kostenfunktionen, die einen Kompromiss zwischen unterschiedliche Kosten, z. B. Emissionskosten, Kosten für den Kraftstoffverbrauch, Kosten für die Lebensdauer des Öls, Kosten für das Ansprechverhalten des Systems, Kosten für Lärmemissionen und/oder Kosten für die Lebensdauer der Batterie ermöglichen.

Der Erfindung liegt die Aufgabe zugrunde, dass erfindungsgemäße Verfahren zu verbessern, insbesondere so, dass die Lastpunktverschiebung als nicht störend vom Fahrer empfunden wird.

Die Erfindung zugrunde liegende Aufgabe wird nun durch ein Verfahren mit den Merkmalen des Patentanspruchs 1 gelöst.

Das Verfahren dient zum Betrieb einer Verbrennungskraftmaschine eines Kraftfahrzeugs, wobei ein elektrisch beheiztes Bauteil, insbesondere ein e-Kat, einer Abgasnachbehandlung über eine von der Verbrennungskraftmaschine angetriebene elektrische Maschine, beispielsweise ein Riemenstartergenerator, mit elektrischer Leistung versorgt wird. Eine Lastpunktverschiebung der Verbrennungskraftmaschine wird beim Aktivieren oder Deaktivieren des Bauteils oder beim Start der Zwischenspeicherung der notwendigen elektrischen Energie zum Betrieb des Bauteils in einer Batterie durchgeführt wird. Erfindungsgemäß wird die Lastpunktverschiebung zu einem der folgenden Zeitpunkte oder bei Vorliegen einer der folgenden Bedingungen durchgeführt:
- während eines Gangwechsels beim Einkuppeln des neuen Gangs
- während eines Wechsels des Fahrmodus, wobei in dem einen Fahrmodus das Fahrzeug von der Verbrennungskraftmaschine angetrieben wird, wobei in dem anderen Fahrmodus, dem sogenannten Schubmodus, die Verbrennungskraftmaschine von der Bewegungsenergie des Kraftfahrzeugs mit eingelegtem Gang angetrieben wird,
- durch Nutzung von Kennfeldbereichen mit ähnlicher Akustik vor und nach der Lastpunktverschiebung,
- wenn der Gradient des Gaspedals sich ändert,
- bei einer Änderung des Fahrprogramms,
- bei einer Zuschaltung oder Abschaltung von Verbrauchern durch den Fahrer.

Die Lastpunktverschiebung, die das Geräusch der Verbrennungskraftmaschine beeinflusst wird zu einem der Zeitpunkte durchgeführt, wenn der Fahrer einen Anstieg des Geräusches der Verbrennungskraftmaschine erwartet oder als nicht störend empfindet:
Kennfeldbereiche mit ähnlicher Akustik können beispielsweise maximal eine Schalldruckänderung wenigen Dezibel zur Folge haben, beispielsweise von weniger als 2 db. Vorzugsweise erfolgt ein solches verstecktes Schalten in Abhängigkeit von der Temperaturdifferenz ΔT. Das Einleiten der Lastpunktverschiebung erfolgt in Abhängigkeit von der Differenz ΔT der Ist-Temperatur zur Soll-Temperatur des Bauteils oder des Abgasmassenstroms, wobei bei einem hohen Heizbedarf eine niedrige Schaltschwelle und bei einem niedrigen Heizbedarf eine hohe Schaltschwelle vorliegt.

Bei einer ersten, größeren Differenz ΔT wird bereits eine Lastpunktverschiebung in einen Kennfeldbereich mit einer Schalldruckänderung von bis zu 1,0 bis 1,5 dB durchgeführt, wobei bei einer zweiten, kleineren Differenz ΔT eine Lastpunktverschiebung in einen Kennfeldbereich mit einer Schalldruckänderung von weniger als 0,2 dB durchgeführt wird.

Wenn eine Änderung des Fahrprogramms z.B. durch Betätigen des Sportknopfes auftritt oder ein Verbraucher durch den Fahrer zugeschaltet wird, beispielsweise eine Klimaanlage oder eine Heizung, empfindet der Fahrer eine Änderung des Geräuschs der Verbrennungskraftmaschine als nicht störend.

Als Bauteile kann hierbei ein DOC, ein SDPF ein SCR-Kat in Betracht kommen. Das versteckte Schalten kann insbesondere beim Aktivieren aber auch beim Deaktivieren des e-Kats durchgeführt werden. Die Temperaturen werden dabei messtechnisch erfasst oder über ein Ersatzmodell analytisch ermittelt.

Vorzugsweise beträgt für ein schnelles Aufheizen die Heizleistung des e-Kats mehr als 2 kW, besser mehr als 3 kW, bevorzugt mehr als 4 kW.

Besonders bevorzugt kann das Verfahren eingesetzt werde bein e-Kat-Systeme, bei denen die Leistung nur diskontinuierlich eingestellt wird. Dies tritt u.a. auf, wenn das e-Kat-Steuergerät als PWM- / Transistor-Schalter ausgeführt ist.

Es gibt nun eine Vielzahl von Möglichkeiten, die Erfindung auszugestalten und weiterzubilden. Es wird zunächst auf den dem Patentanspruch 1 nachgeordneten Patentanspruch verwiesen. Eine bevorzugte Ausgestaltung wird nun anhand der Zeichnung und der dazugehörigen Beschreibung erläutert. In der Zeichnung zeigt:
- Fig. 1: in einer schematischen Darstellung und ein Vorderbereich eines Kraftfahrzeugs,
- Fig. 2: in einer schematischen Darstellung eine Abgasnachbehandlung, und
- Fig. 3: eine schematische Darstellung des Zusammenhangs zwischen der Temperaturdifferenz und der Schaltschwelle.

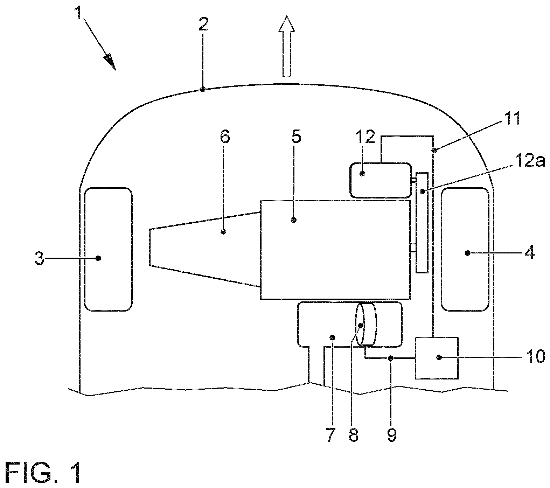

Fig. 1 zeigt einen stark schematisch dargestellten Vorderwagen 1 eines Kraftfahrzeuges, dessen Außenkontur durch eine Umrisslinie angedeutet ist. Die Fahrtrichtung ist durch einen Pfeil angedeutet. Dargestellt sind ferner zwei Räder 3, 4. Die Räder werden über eine Verbrennungskraftmaschine VKM, 5 und ein Getriebe 6 angetrieben. In dem Abgasstrang 7 ist eine Abgasnachbehandlung (ANB) vorhanden. Die Abgasnachbehandlung bzw. ANB umfasst einen e-Kat 8, der über eine Leitung 9 mit einem e-Kat-Steuergerät 10 verbunden ist. Das e-Kat-Steuergerät 10 ist wiederum über eine Leitung 11 mit einem Riemenstartergenerator 12 verbunden. Der Riemenstartergenerator 12 wird über einen Riemen 12a angetrieben und kann so über die Leitung 11 Strom zum e-Kat-Steuergerät 10 leiten.

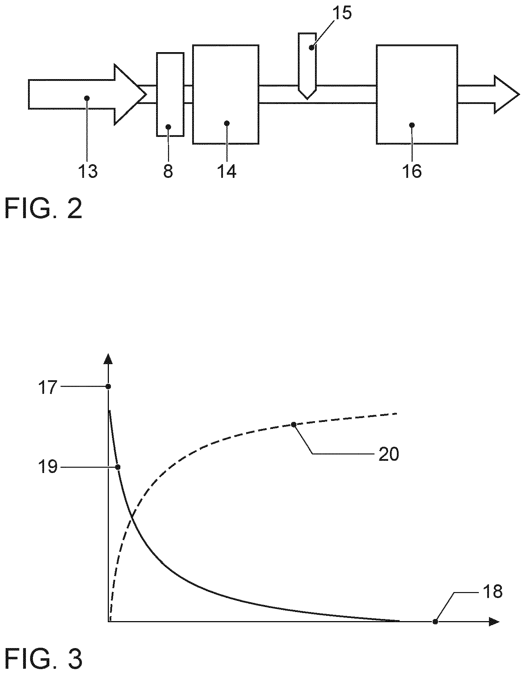

In Fig. 2 ist schematisch die Abgasnachbehandlung dargestellt. Es wird Abgas 13 von der Verbrennungskraftmaschine zunächst dem e-Kat 8 zugeführt. Die e-Kat-Position ist hier lediglich beispielhaft dargestellt und kann auch an anderer Stelle liegen. Stromabwärts des e-Kats 8 ist ein Dieseloxidationskatalysator (DOC) 14 angeordnet. Stromabwärts des Dieseloxidationskatalysators (DOC) 14 ist ein Temperatursensor 15 angeordnet. Mittels des Temperatursensors 15 ist die Abgastemperatur des aus dem Dieseloxidationskatalysator 14 austretenden Abgases messbar. Stromabwärts des Temperatursensors 15 ist ein Dieselpartikelfilter 16, insbesondere mit einer SCR-Beschichtung (SDPF) angeordnet.

Bei dem erfindungsgemäßen Verfahren werden Lastpunktverschiebungen, die das Geräusch der Verbrennungskraftmaschine 5 beeinflussen zu einem Zeitpunkt durchgeführt, wenn der Fahrer einen Anstieg des Geräuschs der Verbrennungskraftmaschine 5 erwartet oder als nicht störend empfindet. Dabei ist bevorzugt das Aktivieren, aber auch das Deaktivieren des e-Kats 8 relevant. Beispielsweise kann das Schalten während eines Gangwechsels beim Einkuppeln des neuen Gangs erfolgen.

Ferner kann das verstecke Schalten während eines Wechsels des Fahrmodus erfolgen, wobei in dem einen Fahrmodus das Fahrzeug von der Verbrennungskraftmaschine VKM, 5 angetrieben wird, wobei in dem anderen Fahrmodus, dem sogenannten Schubmodus, die Verbrennungskraftmaschine VKM, 5 von der Bewegungsenergie des Kraftfahrzeugs mit eingelegtem Gang angetrieben wird. Das versteckte Schalten kann bei einem Wechsel von dem einen Fahrmodus (Fahrzeug wird von VKM angetrieben) in den Schubmodus oder von dem Schubmodus in den einen Fahrmodus (Fahrzeug wird von VKM angetrieben) erfolgen.

Ferner kann das verstecke Schalten durch Nutzung von Kennfeldbereichen mit ähnlicher Akustik vor und nach der Lastpunktverschiebung erfolgen. Die Schalldruckänderung kann dabei bei einer größeren erforderlichen Temperaturänderung ΔT groß sein, beispielsweise 1,0 bis 1,5 dB und bei einer kleinen erforderlichen Temperaturänderung ΔT klein sein. Dieser Zusammenhang ist in Fig. 3 dargestellt. Auf der horizontalen Achse 18 ist die Temperaturdifferenz ΔT, das heißt die Differenz von der Ist-Temperatur zur Solltemperatur aufgetragen. Auf der vertikalen Achse 17 ist die Schaltschwelle aufgetragen. Die Kurve 20 gibt nun an, dass, wenn ΔT groß ist, auch eine größere Schalldruckänderung erlaubt ist, während ΔT klein ist nur kleine Schalldruckänderungen erwünscht sind.

Ferner kann das verstecke Schalten erfolgen, wenn der Gradient des Gaspedals sich ändert. Ferner ist noch in Fig. 3 die Schaltschwelle für einen Gaspedalgradienten dargestellt. Wenn ΔT groß ist, ist die Schaltschwelle klein und liegt beispielsweise bei weniger als 50% pro Sekunde. Wenn ΔT klein ist, ist die Schaltschwelle groß, das heißt der Gaspedalgradient sollte hierbei oberhalb von 200% pro Sekunde liegen.

Ferner kann das verstecke Schalten bei einer Änderung des Fahrprogramms erfolgen, dies ist beispielsweide möglich, wenn der Fahrer ein Sportprogramm aktiviert.

Ferner kann das versteckte Schalten bei einer Zuschaltung oder Abschaltung von Verbrauchern durch den Fahrer erfolgen.

Ferner ist ein verstecktes Schalten möglich, durch das Zuschalten von Verbraucher durch den Fahrer. Es ist möglich die notwendige elektrische Energie zum Betrieb des e-Kats 8 in einer Batterie zwischenzuspeichern, wobei die Aufladung der Batterie über die elektrische Maschine, wie oben beschrieben, versteckt geschaltet wird.

### Bezugszeichenliste

- 1: Vorderwagen
- 2: Außenkontur des Vorderwagens
- 3: Rad
- 4: Rad
- 5: Verbrennungskraftmaschine (VKM)
- 6: Getriebe
- 7: Abgasstrang mit Abgasnachbehandlung
- 8: E-Kat
- 9: Leitung
- 10: E-Kat-Steuergerät
- 11: Leitung
- 12: Riemenstartergenerator
- 12a: Riemen
- 13: Abgas
- 14: Dieseloxidationskatalysator
- 15: Temperatursensor
- 16: Dieselpartikelfilter mit SCR-Beschichtung
- 17: Schaltschwellen-Achse
- 18: Achse Temperaturdifferenz ΔT

## Patentansprüche

1. Verfahren zum Betrieb einer Verbrennungskraftmaschine (5) eines Kraftfahrzeugs, wobei ein elektrisch beheiztes Bauteil (8) einer Abgasnachbehandlung (ANB) über eine von der Verbrennungskraftmaschine (5) angetriebene elektrische Maschine mit elektrischer Leistung versorgt wird, wobei eine Lastpunktverschiebung der Verbrennungskraftmaschine (5) durch ein Aktivieren oder ein Deaktivieren des Bauteils (8) oder durch eine Zwischenspeicherung der notwendigen elektrischen Energie zum Betrieb des Bauteils (8) in einer Batterie durchgeführt wird, **dadurch gekennzeichnet, dass** die Lastpunktverschiebung zu einem der folgenden Zeitpunkte oder einer der folgenden Bedingungen durchgeführt wird:
- während eines Gangwechsels beim Einkuppeln des neuen Gangs
- während eines Wechsels des Fahrmodus, wobei in dem einen Fahrmodus das Fahrzeug von der Verbrennungskraftmaschine (5) angetrieben wird, wobei in dem anderen Fahrmodus, dem sogenannten Schubmodus, die Verbrennungskraftmaschine (5) von der Bewegungsenergie des Kraftfahrzeugs mit eingelegtem Gang angetrieben wird,
- durch Nutzung von Kennfeldbereichen mit ähnlicher Akustik vor und nach der Lastpunktverschiebung,
- wenn der Gradient des Gaspedals sich ändert,
- bei einer Änderung des Fahrprogramms,
- bei einer Zuschaltung oder Abschaltung von Verbrauchern durch den Fahrer, wobei bei einer ersten, größeren Differenz ΔT der Ist-Temperatur zur Soll-Temperatur des Bauteils oder des Abgasmassenstroms eine Lastpunktverschiebung in einen Kennfeldbereich mit einer Schalldruckänderung von bis zu 1,0 bis 1,5 dB durchgeführt wird, wobei bei einer zweiten, kleineren Differenz ΔT der Ist-Temperatur zur Soll-Temperatur des Bauteils oder des Abgasmassenstroms eine Lastpunktverschiebung in einen Kennfeldbereich mit einer Schalldruckänderung von weniger als 0,2 dB durchgeführt wird.

2. Verfahren nach Anspruch 1, **dadurch gekennzeichnet, dass** bei einer ersten, größeren Differenz ΔT eine Lastpunktverschiebung bei einer Gaspedalgradientenänderung von weniger als 50% pro Sekunde durchgeführt wird, wobei bei einer zweiten, kleineren Differenz ΔT eine Lastpunktverschiebung bei einer Gaspedalgradientenänderung von mehr als 200% pro Sekunde durchgeführt wird.

## Claims

1. Method for operating an internal combustion engine (5) of a motor vehicle, an electrically heated component (8) of an exhaust gas aftertreatment means (ANB) being supplied with electric power via an electric machine which is driven by the internal combustion engine (5), a load point shift of the internal combustion engine (5) being carried out by way of an activation or deactivation of the component (8) or by way of intermediate storage of the necessary electric power for operating the component (8) in a battery, **characterized in that** the load point shift is carried out at one of the following times or in one of the following conditions:
- during a gear change when the new gear is engaged,
- during a change of the driving mode, the vehicle being driven by the internal combustion engine (5) in the one driving mode, the internal combustion engine (5) being driven by the kinetic energy of the motor vehicle by way of an engaged gear in the other driving mode, which is known as the overrun mode,
- by way of the use of engine map ranges with similar acoustics before and after the load point shift,
- when the gradient of the accelerator pedal changes,
- in the case of a change in the driving programme,
- in the case of switching on or off of loads by the driver,
a load point shift into an engine map range with a sound pressure change of up to from 1.0 to 1.5 dB being carried out in the case of a first, greater difference ΔT of the actual temperature from the setpoint temperature of the component or the exhaust gas mass flow, a sound pressure change of less than 0.2 dB being carried out in the case of a second, smaller difference ΔT of the actual temperature from the setpoint temperature of the component or the exhaust gas mass flow.

2. Method according to Claim 1, **characterized in that** a load point shift in the case of an accelerator pedal gradient change of less than 50% per second is carried out in the case of a first, greater difference ΔT, a load point shift in the case of an accelerator pedal gradient change of more than 200% per second being carried out in the case of a second, smaller difference ΔT.

## Revendications

1. Procédé pour faire fonctionner un moteur à combustion interne (5) d'un véhicule automobile, un composant (8) chauffé électriquement d'un post-traitement des gaz d'échappement (ANB) étant alimenté en puissance électrique par le biais d'une machine électrique entraînée par le moteur à combustion interne (5), un décalage du point de charge du moteur à combustion interne (5) étant effectué par une activation ou une désactivation du composant (8) ou par un stockage intermédiaire de l'énergie électrique nécessaire pour faire fonctionner le composant (8), **caractérisé en ce que** le décalage du point de charge est effectué à l'un des instants suivants ou sous l'une des conditions suivantes :
- pendant un changement de rapport lors de l'engagement du nouveau rapport,
- pendant un changement du mode de conduite, dans un mode de conduite le véhicule étant propulsé par le moteur à combustion interne (5) et dans l'autre mode de conduite, le mode dit de poussée, le moteur à combustion interne (5) étant entraîné par l'énergie cinétique du véhicule automobile avec un rapport engagé,
- par l'utilisation de plages de diagramme caractéristique avec une acoustique similaire avant et après le décalage du point de charge,
- lorsque le gradient de la pédale d'accélérateur change,
- lors d'une modification du programme de conduite,
- lors de la mise en circuit ou de la mise hors circuit de consommateurs par le conducteur,
un décalage du point de charge étant effectué dans une plage de diagramme caractéristique avec une modification de la pression acoustique pouvant atteindre 1,0 à 1,5 dB en présence d'une première différence ΔT, plus grande, entre la température réelle et la température de consigne du composant ou du débit massique des gaz d'échappement, un décalage du point de charge étant effectué dans une plage de diagramme caractéristique avec une modification de la pression acoustique de moins de 0,2 dB en présence d'une deuxième différence ΔT, plus petite, entre la température réelle et la température de consigne du composant ou du débit massique des gaz d'échappement.

2. Procédé selon la revendication 1, **caractérisé en ce qu'**en présence de la première différence ΔT, plus grande, un décalage du point de charge est effectué dans le cas d'un changement du gradient de la pédale d'accélérateur de moins de 50 % par seconde, alors qu'en présence de la deuxième différence ΔT, plus petite, un décalage du point de charge étant effectué dans le cas d'un changement du gradient de la pédale d'accélérateur de plus de 200 % par seconde.
